# EUROPÄISCHE PATENTSCHRIFT

(11) **EP 2 156 251 B1**
(45) Veröffentlichungstag und Bekanntmachung des Hinweises auf die Patenterteilung: **09.08.2017**
(21) Anmeldenummer: 08760481.5
(22) Anmeldetag: 04.06.2008
(51) Int. Cl.: G05B 19/042, G05B 19/418, G05B 23/02

(54) **FELDGERÄT MIT EINER VORRICHTUNG ZUR DURCHFÜHRUNG VON DIAGNOSEVERFAHREN**
FIELD DEVICE HAVING A UNIT FOR CARRYING OUT DIAGNOSTIC METHODS
APPAREIL DE TERRAIN COMPRENANT UNE UNITÉ DE MISE EN OEUVRE DE PROCÉDÉS DE DIAGNOSTICS

(30) Priorität: 11.06.2007 DE 102007027276
(43) Veröffentlichungstag der Anmeldung: 24.02.2010
(73) Patentinhaber: Endress+Hauser GmbH+Co. KG, 79689 Maulburg (DE)
(72) Erfinder: HAMMER, Manfred, 79664 Wehr (DE); SCHROTH, Herbert, 79650 Schopfheim (DE); SPANKE, Dietmar, 79585 Steinen (DE)
(74) Vertreter: Andres, Angelika Maria
(86) Internationale Anmeldenummer: PCT/EP2008/056899
(87) Internationale Veröffentlichungsnummer: WO 2008/151971

(56) Entgegenhaltungen:
- EP-A- 0 768 584
- DE-A1- 10 252 892
- DE-A1-102005 051 769
- US-B1- 6 298 308
- "ALERT Analysis Systems. Machine Condition Assessment Software" INTERNET CITATION, [Online] 2004, Seiten 1-6, XP007906185 Gefunden im Internet: URL:http://www.dliengineering.com/publishe d/AlertSystems.pdf> [gefunden am 2008-11-03]

## Beschreibung

Die Erfindung betrifft ein Feldgerät mit einer Vorrichtung zur Durchführung von Diagnoseverfahren und ein Verfahren zur Implementierung von Diagnoseverfahren in diesem Feldgerät.

In der industriellen Messtechnik, insb. in der Automatisierungs- und Prozesssteuerungstechnik, werden regelmäßig Feldgeräte eingesetzt, die im Prozessablauf Prozessvariablen messen (Sensoren) oder Regelgrößen steuern (Aktoren).

Zu den Feldgeräten zählen z.B. Durchfluss-, Füllstands-, Druck- oder Differenzdruck- und Temperaturmessgeräte. Sie sind in der Regel dezentral in unmittelbarer Nähe der zu messenden oder zu steuernden Prozesskomponente angeordnet, und liefern ein Messsignal, das dem Messwert der erfassten Prozessvariablen entspricht. Die Messsignale der Feldgeräte werden an eine übergeordnete Einheit, z.B. eine zentrale Steuereinheit, wie z.B. eine Warte oder ein Prozessleitsystem, weitergeleitet. In der Regel erfolgt die gesamte Prozessteuerung über die übergeordnete Einheit, die die Messsignale der einzelnen Messgeräte empfängt und auswertet und in Abhängigkeit von deren Auswertung Steuerungssignale für die Aktoren erzeugt, die den Prozessablauf steuern. Auf diese Weise kann beispielsweise ein Durchfluss durch einen Rohrleitungsabschnitt mittels eines steuerbaren Ventils in Abhängigkeit von einem gemessenen Durchfluss eingestellt werden.

Ein einwandfreies und reibungsloses Arbeiten der Feldgeräte ist für die Sicherheit der Anwendungen, in denen sie eingesetzt werden von großer Bedeutung. Entsprechend wird die Funktionsfähigkeit von Feldgeräten genau überwacht und auftretende Fehler werden durch entsprechende Fehlermeldungen, z.B. in Form einer Warnung oder eines Alarms, angezeigt. Vorzugsweise erfolgt die Überwachung durch das Feldgerät selbst, indem das Feldgerät eine Selbstüberwachung und/oder Diagnose ausführt.

Hierzu sind Feldgeräte heute teilweise mit einer Vorrichtung zur Durchführung von Diagnoseverfahren ausgestattet. Diese sind in der Lage anhand von im Feldgerät zur Verfügung stehenden Eingangsgrößen das Auftreten bestimmter Fehler oder Zustände des Feldgeräts zu diagnostizieren. Hierzu werden die Eingangsgrößen anhand von im Feldgerät fest implementierten Auswerteverfahren analysiert und es wird das Eintreten von für den Fehler oder den Zustand charakteristischen Überwachungskriterien überwacht. Tritt ein solches Überwachungskriterium ein, gibt das Feldgerät die zugeordnete Diagnose aus.

Derartige Feldgeräte sind beispielsweise in der US 6, 397, 114 B1 beschrieben. Die dort beschriebenen Feldgeräte sind in der Lage vorgegebene Fehler bzw. Zustände anhand von im Feldgerät zur Verfügung stehenden Eingangsgrößen zu diagnostizieren und anzuzeigen, indem die Eingangsgrößen fest vorgegebenen Auswerteverfahren unterzogen werden, deren Ergebnis dann anhand von fest vorgegebene Überwachungskriterien überwacht werden.

Heutige Diagnoseverfahren sind im Feldgerät werkseitig vorgegeben und beschränken sich in der Regel auf die Erkennung feldgerät-spezifische Fehler oder Zustände.

Es gibt jedoch eine sehr große Anzahl von Fehlern oder Zuständen, die anwendungs-spezifisch sind und mit heutigen Diagnosemöglichkeiten vom Feldgerät entweder gar nicht erfasst oder nicht ausreichend genau analysiert, bewertet und/oder interpretiert werden.

Ein Grund hierfür besteht darin, dass Hersteller von Feldgeräten in der Regel vorab nicht wissen, wo und wie das Feldgerät eingesetzt werden wird. Entsprechend weiß der Hersteller nicht, welche Fehler oder Zustände für den Anwender am Einsatzort relevant sind, und welche Bedeutung ihnen dort zukommt.

In diesen Fällen haben sich Anwender in der Vergangenheit häufig geholfen, indem sie alle für einen anwendungs-spezifischen Fehler und/oder Zustand relevanten Eingangsgrößen über entsprechende Anschlussleitungen oder Schnittstellen vom Feldgerät in eine übergeordnete Einheit, z.B. ein Prozessleitsystem, geladen und dort zentral entsprechend den Bedürfnissen der speziellen Anwendung weiter verarbeitet und ausgewertet haben. Dies ist jedoch verhältnismäßig aufwendig, da der Anwender hierzu in der Regel eigene Software erstellen und in der übergeordneten Einheit implementieren muss. Außerdem entsteht hierdurch ein gegebenenfalls nicht unerheblicher Datenfluss zwischen dem Feldgerät und der übergeordneten Einheit, der unter Umständen anderweitig benötigte Schnittstellen blockiert und/oder Übertragungskapazitäten belegt. Ein weiterer Nachteil besteht darin, dass die Anzahl der Eingangsgrößen, die über Anschlussleitungen und/oder Schnittstellen vom Feldgerät ausgegeben werden können, sehr begrenzt ist.

Aus der US 6 298 308 B1 ist ein Verfahren bekannt, in dem Lokalexperten in verschiedenen Maschineanlagen vorgesehen sind. Die Lokalexperten sind automatisierte Datensammler/Analysatoren, die konfiguriert sind, um Vibrationsdaten im wesentlich kontinuierlich von einer oder mehreren in der Anlage angeordnete Maschinen zu sammeln und analysieren. Die Vibrationsdaten werden in der Realzeit analysiert, und der Zustand der Maschinen wird ohne zusätzliche Datensammler überwacht. Weiterhin bekannt ist die Druckschrift: "ALERT Analysis Systems, Machine Condition Assessment Software", DLI Engineering, 2004.

Es ist eine Aufgabe der Erfindung ein Feldgerät anzugeben, dass in der Lage ist ein breites Spektrum möglicher Fehler und/oder Zustände zu diagnostizieren.

Hierzu besteht die Erfindung in einem Feldgerät gemäß Anspruch 1. Gemäß einer Ausgestaltung umfasst die Erfindung ein Feldgerät, bei dem
- mindestens ein Speicher vorgesehen ist, in dem die zur Verfügung stehenden Eingangsgrößen, die zur Verfügung stehenden Auswerteverfahren, und die zur Verfügung stehenden Überwachungskriterien aufgelistet sind,
- die Schnittstelle mit einer Anzeige verbunden ist, die dazu dient, dem Anwender die zur
   Verfügung stehenden Eingangsgrößen, die zur Verfügung stehenden Auswerteverfahren und die zur Verfügung stehenden Überwachungskriterien anzuzeigen, und
- die Schnittstelle mit einer Eingabevorrichtung verbunden ist, über die der Anwender
   für jedes anwender-definierte Diagnoseverfahren die zugehörigen Eingangsgrößen, Auswerteverfahren, Überwachungsverfahren, und die Diagnose vorgibt.

Gemäß einer Ausgestaltung umfassen die Auswerteverfahren statische Auswertungen und die Überwachungskriterien umfassen Vergleiche und/oder logische Verknüpfungen.

Gemäß einer Weiterbildung ist der Auswerteeinheit eine interne Uhr zugeordnet.

Gemäß einer Ausgestaltung ist die Schnittstelle mit einer unmittelbar am Feldgerät angeordneten Bedienoberfläche mit einer Anzeige und einer Eingabevorrichtung verbunden.

Gemäß einer Weiterbildung umfasst die Diagnose eine vom Anwender inhaltlich vorgegebene in einem Speicher im Feldgerät abgespeicherte den zu diagnostizierenden Fehler oder Zustand bezeichnende Meldung. Vorzugsweise umfasst die Diagnose zusätzlich eine vom Anwender inhaltlich vorgegebene in einem Speicher im Feldgerät abgespeicherte Ursache und/oder Abhilfemaßnahme, die zusammen mit der zugehörigen Meldung ausgegeben wird.

Weiter besteht die Erfindung in einem Verfahren gemäß Anspruch 9. Die Erfindung und weitere Vorteile werden nun anhand der Figuren der Zeichnung, in der ein Ausführungsbeispiel dargestellt ist, näher erläutert; gleiche Elemente sind in den Figuren mit gleichen Bezugszeichen versehen.
- Fig. 1 zeigt: ein Blockschaltbild eines erfindungsgemäßen Feldgeräts mit einer Vorrichtung zur Durchführung von anwender-definierten Diagnoseverfahren; und
- Fig. 2 zeigt: die Vorrichtung zur Durchführung anwender-definierter Diagnoseverfahren.

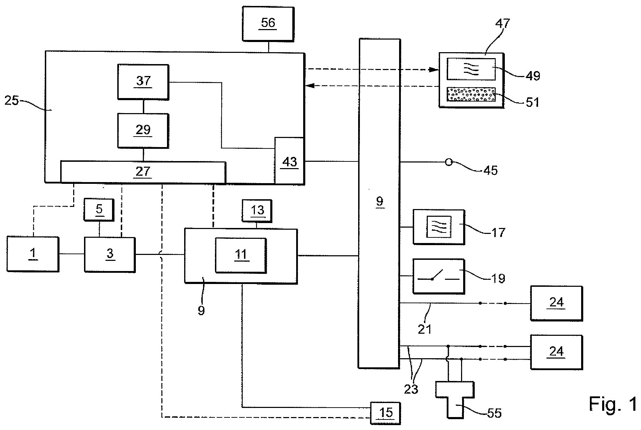

Fig. 1 zeigt ein vereinfachtes Blockschaltbild eines erfindungsgemäßen Feldgeräts. In dem dargestellten Ausführungsbeispiel handelt es sich um ein Messgerät. Dieses umfasst einen Sensor 1, zur Erfassung einer physikalischen Messgröße, z.B. eines Füllstandes, eines Drucks oder einer Temperatur, der ein der physikalischen Messgröße entsprechendes Sensorsignal erzeugt.

Eine wichtige Klasse stellen dabei die nach dem Laufzeitprinzip arbeitenden Füllstandsmessgeräte dar. Diese bestimmen den Füllstand eines Füllguts in einem Behälter, indem elektromagnetische Signale oder Ultraschallwellen in Richtung der Füllgutoberfläche gesendet und deren Echo empfangen werden. Es wird eine Laufzeit ermittelt, die die Signale für den Weg zur Füllgutoberfläche und zurück benötigen und daraus der Füllstand bestimmt.

Die mit elektromagnetischen Signalen arbeitenden Füllstandsmessgerät werden in zwei Klassen unterschieden; eine erste Klasse, bei der die elektromagnetischen Signale mittels einer Antenne in Richtung des Füllguts gesendet, an der Füllgutoberfläche reflektiert und anschließend nach einer abstandsabhängigen Laufzeit wieder empfangen werden, und eine zweite Klasse, bei der die elektromagnetischen Signale entlang eines Wellenleiters in Richtung des Füllguts geführt werden, an der Füllgutoberfläche aufgrund des dort bestehenden Impedanzsprunges reflektiert werden und die reflektierten Signale entlang des Wellenleiter wieder aus dem Behälter heraus geführt und nach einer abstandsabhängigen Laufzeit wieder empfangen werden.

An den Sensor 1 ist eine Signalaufbereitung 3 angeschlossenen, die das Sensorsignal für eine weitere Verarbeitung und/oder Auswertung aufbereitet. Die Signalaufbereitung 3 kann beispielsweise darin bestehen, dass das Sensorsignal gefiltert, verstärkt und/oder digitalisiert wird. Zusätzlich kann eine Kompensation von Messfehlern, wie z.B. eine Kompensation temperaturabhängiger Abweichungen vorgenommen werden. Hierzu können beispielsweise in einem Speicher 5 abgelegte Parameter, Kennlinien und/oder Kalibrationsdaten herangezogen werden.

Das aufbereitete Sensorsignal ist einer Signalverarbeitung 7 zugeführt, die anhand des aufbereiteten Sensorsignals die zu messende physikalische Größe bestimmt, und ein entsprechendes Ausgangssignal über eine Ausgabeeinheit 9 des Feldgeräts zur Verfügung stellt.

Die Signalverarbeitung 7 weist vorzugsweise eine elektronische Einheit 11, z.B. einen Mikroprozessor, auf, der das aufbereitete Sensorsignal zugeführt wird. Die elektronische Einheit 11 bestimmt die zu messende Größe beispielsweise anhand von in einem Speicher 13 abgelegten Berechnungsvorschriften, wobei sie beispielsweise ebenfalls im Feldgerät, z.B. in den Speichern 5 und/oder 13, abgespeicherte Parameter, Kennlinien und/oder Kalibrationsdaten hinzuzieht. Zusätzlich können der Signalverarbeitung 7 zur Bestimmung der physikalischen Größe weitere Informationen zugeführt werden. Diese Informationen können innerhalb des Feldgeräts abgeleitet werden oder aber über entsprechende Schnittstellen 15 von außen zugeführt werden. Ein Beispiel für eine solche Information sind zusätzliche Messgrößen oder Stellgrößen, die beispielsweise intern im Feldgerät, z.B. von weiteren Sensoren, abgeleiteten werden, oder die über die Schnittstelle 15 von außen zugeführt werden.

Feldgeräte sind heute in Verbindung mit einer Vielzahl verschiedener Arten von Ausgängen auf dem Markt erhältlich. Einige Arten sind in Fig. 1 beispielhaft dargestellt und können sowohl nebeneinander als auch alternativ zueinander vorgesehen sein. Die Ausgabeeinheit 9 umfasst beispielsweise eine Vorortanzeige 17, ein Relais 19, oder Anschlussleitungen 21, 23 über die das Ausgangssignal in analoger oder digitaler Form einer übergeordneten Einheit 18, z.B. einer speicherprogrammierbaren Steuerungen (SPS), einem Prozessleitsystem (PLS) oder einem Personalcomputer (PC) zuführbar ist.

Die Ausgabe eines digitalen Ausgangsignals kann beispielsweise über eine an die Ausgabeeinheit 9 angeschlossene Datenbusleitung, hier die Anschlussleitung 21 erfolgen. Bekannte internationale Standards für diese Art der Signalübertragung sind Profibus, Foundation Fieldbus oder CAN-Bus.

Die Ausgabe von analogen Ausgangssignalen erfolgt sehr häufig über ein an die Ausgabeeinheit 9 angeschlossenes Leitungspaar, hier die beiden Anschlussleitungen 23, über das sowohl die Versorgung des Feldgeräts als auch die Ausgabe des Ausgangsignals erfolgt. Diese Geräte werden häufig als 2-Draht-Geräte bezeichnet. Standardmäßig werden solche Geräte mit Spannungen im Bereich von 12 V bis 36 V gespeist und das Feldgerät steuert einen über das Leitungspaar fließenden Strom in Abhängigkeit von einem momentanen Messwert. Das Ausgangssignal ist bei diesen Feldgeräten ein Signalstrom. Gemäß einem in der Mess- und Regeltechnik üblichen Standard wird der Signalstrom in Abhängigkeit von dem momentanen Messwert auf Werte zwischen einem minimalen Signalstrom von 4 mA und einem maximalen Signalstrom von 20 mA eingestellt. Zusätzlich kann dem Signalstrom ein Kommunikationssignal überlagert werden, über das eine bidirektionale Kommunikation mit dem Feldgerät erfolgen kann. Auch hierfür liegen in der Mess- und Regeltechnik übliche Standards, wie z.B. Hart, vor.

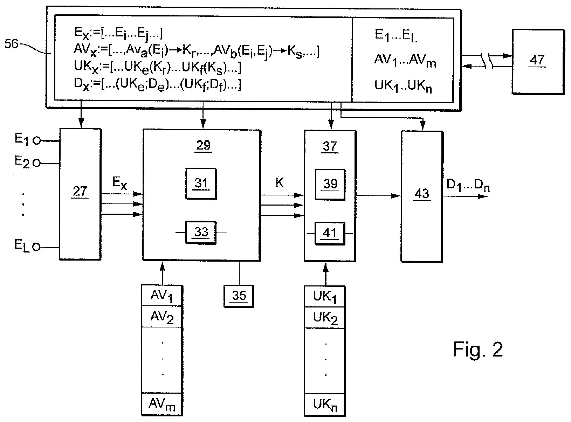

Das Feldgerät weist erfindungsgemäß eine Vorrichtung 25 zur Durchführung von anwender-definierten Diagnoseverfahren auf. Diese Vorrichtung 25 kann Bestandteil der Signalverarbeitung 7 sein, sie kann aber auch als eigenständige Einheit ausgebildet sein. Alternativ können natürlich auch mehrere dezentrale Teileinheiten an funktions-relevanten Orten im Feldgerät angeordnet sein, die miteinander verbunden sind. In dem in Fig. 1 dargestellten Ausführungsbeispiel ist sie als eine separate Einheit dargestellt. Die Vorrichtung 25 ist in Fig. 2 im Detail dargestellt.

Sie weist eine Eingangsschaltung 27 auf, über die der Vorrichtung mindestens eine Eingangsgröße E zugeführt wird. In Fig. 2 sind L Eingangsgrößen E₁ ... E_{L} dargestellt. Ein Beispiel für eine Eingangsgröße E ist das Sensorsignal, das der Eingangsschaltung 27 als Rohsignal oder in aufbereiteter Form zugeführt werden kann. Bei nach dem Laufzeitprinzip arbeitenden Füllstandsmessgeräten ist dies beispielsweise das empfangene Echosignal, das als Rohsignal oder in aufbereiteter Form, z.B. in Form einer daraus abgeleiteten Hüllkurve, als Eingangssignal E zugeführt wird. Eine weitere Eingangsgröße E sind zusätzliche Mess- oder Stellgrößen, die beispielsweise intern im Feldgerät, z.B. von zusätzlichen Sensoren, wie z.B. Temperatursensoren, abgeleitet werden, oder die über die Schnittstelle 15 von außen zugeführt werden. Mit einem Temperatursensor kann beispielsweise die Temperatur der Messgerätelektronik bestimmt und als Eingangsgröße E zur Verfügung gestellt werden.

Weitere Eingangsgrößen E sind beispielsweise vom Feldgerät abgeleitete Messergebnisse, wie z.B. ein aktueller Druck oder Füllstand. Im Zusammenhang mit den eingangs genannten nach dem Laufzeitprinzip arbeitenden Füllstandsmessgeräten stellen z.B. die Echoamplituden einzelner Echos, insb. die Amplituden von Nutz- und/oder Störechos, sowie das Signalzu Rausch Verhältnis, wichtige Eingangsgrößen E dar. Wird ein Wellenleiter zur Führung der elektromagnetischen Signale eingesetzt, so stellen Laufzeit, Amplitude und/oder Polarität eines gegebenenfalls durch eine Reflektion am Wellenleiterende entstehenden Echos weitere sehr relevante Eingangsgrößen E dar. Die Zufuhr der Eingangsgrößen E ist in Fig. 1 symbolisch durch gestrichelt eingezeichnete Verbindungen dargestellt.

Die zur Verfügung stehenden Eingangsgrößen E können in der Vorrichtung 25 einzelnen oder mehreren Auswerteverfahren AV zugeführt werden. Die hierzu zur Verfügung stehenden Auswerteverfahren AV1 ... AVm sind im Feldgerät als modular einsetzbare Funktionsblöcke realisiert, die dazu dienen, das jeweilige Auswerteverfahren AV auszuführen.

An die Eingangsschaltung 27 ist eine Auswerteinheit 29 angeschlossen, die dazu dient, anhand von mindestens einer vom Anwender ausgewählten Eingangsgröße E und mindestens einem vom Anwender ausgewählten Auswerteverfahren AV mindestens eine Kenngröße K abzuleiten. Zu den Auswerteverfahren AV zählen insb. Mittelwertbildungen, Intergralbildungen, Summenbildungen, die Bestimmung von Extremwerten, wie Minimum und Maximum, die Ermittelung von Anzahl oder Häufigkeit von Nulldurchgängen, die Ableitung von Korrelationsfunktionen oder Fourier-Transformationen, sowie die Bestimmung von Frequenzen und/oder Amplituden der Eingangsgrößen E.

Insb. bei nach dem Laufzeitprinzip arbeitenden Füllstandsmessgeräten können auch Auswerteverfahren AV vorgesehen sein, die anhand der als Eingangsgrößen E zugeführten Echosignale z.B. die Echoamplituden einzelner Echos, insb. die Amplituden von Nutz- und/oder Störechos, sowie das Signalzu Rausch Verhältnis, ermitteln. Wird ein Wellenleiter zur Führung der elektromagnetischen Signale eingesetzt, so können weiterhin Auswerteverfahren vorgesehen sein, die die Laufzeit, Amplitude und/oder Polarität eines gegebenenfalls durch eine Reflektion am Wellenleiterende entstehenden Echos anhand des als Eingangsgröße E zur Verfügung stehenden Echosignals ableiten. Diese Auswerteverfahren AV sind natürlich nur dann sinnvoll, wenn die entsprechenden durch sie zu bestimmenden Größen nicht bereits als Eingangsgrößen E zur Verfügung stehen.

Die einzelnen Auswerteverfahren AV sind in den zugehörigen Funktionsblöcken im Feldgerät fest implementiert und werden durch entsprechende Vorgaben des Anwenders zugeschaltet und auf vom Anwender ausgewählte Eingangsgrößen E angewendet.

Hierzu können die Auswerteverfahren AV z.B. in Form von Software-Modulen im Feldgerät vorhanden sein, die von einem in der Auswerteinheit 29 vorgesehenen Mikroprozessor 31 ausgeführt werden, dem die Eingangsgrößen E in digitaler Form zugeführt werden. Alternativ können einzelne oder alle Auswerteverfahren AV auch durch eigens hierfür vorgesehene Schaltungen 33 ausgeführt werden, die entsprechend den Vorgaben des Anwenders zugeschaltet werden. Hierzu können beispielsweise handelsübliche vorgefertigte Bausteine, eingesetzt werden, die speziell für die Ausführung bestimmter Aufgaben ausgelegt sind. Beispiele hierfür sind digitale Signalprozessoren für die Ausführung von Fourier-Transformationen und Filter oder ähnliche Komponenten, die beispielsweise für eine Signalselektion und eine nachfolgende Bearbeitung, z.B. eine Mittelwertbildung, einsetzbar sind.

Vorzugsweise ist der Auswerteeinheit 29 eine interne Uhr 35 zugeordnet. Hierdurch ist die Möglichkeit gegeben, von der Zeit abhängige Auswertungen, wie z.B. die Mittelwertbildung über einen vorgegebenen Zeitraum, oder die Geschwindigkeit mit der sich eine Eingangsgröße E, wie z.B. ein gemessener Füllstand, oder eine von einer Eingangsgröße E abgeleitete Kenngröße K, z.B. die Amplitude eines Messsignals, ändern durch entsprechende Auswerteverfahren AV zu bestimmen.

Zusätzlich kann die über diese interne Uhr 35 zur Verfügung stehende Uhrzeit als weitere Eingangsgröße E zur Verfügung gestellt werden.

Erfindungsgemäß bestimmt der Anwender durch entsprechende Vorgaben an das Feldgerät, welche Eingangsgrößen E im Feldgerät welchen Auswertungsverfahren AV unterzogen werden, und legt damit Art und Anzahl der am Ausgang der Auswerteeinheit 29 zur Verfügung stehenden Kenngrößen K fest. Dies kann beispielsweise derart erfolgen, dass eine Eingangsgröße E einem Auswerteverfahren AV unterzogen wird, das dann unmittelbar die gewünschte Kenngröße K erzeugt. Alternativ kann eine Eingangsgröße E mehreren Auswerteverfahren AV unterzogen werden, wobei jedes Auswerteverfahren AV jeweils eine Kenngröße K erzeugt. Ebenso ist es möglich, mehrere Auswerteverfahren AV hintereinander anzuwenden, indem eine oder mehrere von einem Auswerteverfahren AV erzeugte Kenngrößen K als Eingangsgrößen E für eine weiteres Auswerteverfahren AV herangezogen werden.

Die Kenngrößen K werden einer Überwachungseinheit 37 zugeführt. In der Überwachungseinheit 37 stehen dem Anwender Überwachungskriterien UK zur Verfügung, auf die die Kenngrößen K überprüft werden können. Die Überwachungskriterien UK sind im Feldgerät als Module UK₁ ... UKₙ realisiert, die dazu dienen, das Zutreffen des jeweiligen Überwachungskriteriums UK zu überwachen.

Ein solches Überwachungskriterium UK ist beispielsweise das Über- oder Unterschreiten einer vom Anwender definierten Schwelle. Ein Überwachungskriterium UK kann, wie das oben genannte, eine einzelne Bedingung enthalten, es kann aber auch aus mehreren Teilkriterien zusammengesetzt sein, die beispielsweise durch logische Verknüpfungen, wie z.B. UND- und/oder ODER-Verknüpfungen, miteinander zu einem Kriterium verbunden werden. Ebenso hat der Anwender die Möglichkeit mehrere Überwachungskriterien UK miteinander durch ein weiteres Überwachungskriterium UK oder durch logische Verknüpfungen miteinander zu kombinieren.

Die Überwachungskriterien UK können z.B. in Form von Software-Modulen im Feldgerät vorhanden sein, die von einem in der Überwachungseinheit 37 vorgesehenen Mikroprozessor 39 überprüft werden, dem die gemäß den Vorgaben des Anwenders generierten Kenngrößen K in digitaler Form zugeführt werden. Alternativ können einzelne oder alle Überwachungskriterien UK auch durch eigens hierfür vorgesehene Schaltungen 41 überprüft werden, die entsprechend den Vorgaben des Anwenders zugeschaltet werden. Hierzu können beispielsweise handelsübliche vorgefertigte Bausteine, wie z.B. Komparatoren, eingesetzt werden.

An die Überwachungseinheit 37 ist eine Diagnoseausgabe 43 angeschlossen, die beim Eintreten eines Überwachungskriteriums UK, wie z.B. dem Überschreiten eines Schwellwerts, eine diesem Überwachungskriterium UK zugeordnete Diagnose D ausgibt. Die beim Eintreten des jeweiligen Überwachungskriteriums UK zu stellende Diagnose D wird vorab vom Anwender vorgegeben und in einem Speicher 56 abgelegt. Sie umfasst beispielsweise eine vom Anwender inhaltlich vorgegebene im Speicher 56 abgespeicherte Meldung, die den zu diagnostizierenden Fehler oder Zustand bezeichnet, wie z.B. 'Amplitude des Sensorsignal übersteigt Grenzwert'. Zusätzlich umfasst jede Diagnose D vorzugsweise eine ebenfalls vom Anwender inhaltlich vorgegebene im Speicher 56 abgespeicherte Ursache und/oder eine Abhilfemaßnahme, die als Bestandteil der Diagnose D zusammen mit der Meldung ausgegeben wird.

Der Anwender kennt seinen Prozess in der Regel sehr genau, und weiß daher, welche Eingangsgrößen E für seine Anwendung wichtige Informationen enthalten und auf welche Weise diese Informationen gewonnen werden können. Er hat durch das erfindungsgemäße Feldgerät nun erstmals die Möglichkeit diese Informationen durch die Definition eines entsprechenden anwender-definierten Diagnoseverfahrens unmittelbar vom Feldgerät ermitteln zu lassen und in Form einer für seine Anwendung optimal angepassten Diagnose D anzeigen zu lassen, in die er sowohl die Bezeichnung des Fehlers oder Zustandes, als auch dessen Ursache sowie mögliche Abhilfemaßnahmen aufnehmen kann.

Die Ausgabe der Diagnose D erfolgt vorzugsweise über die Ausgabeeinheit 9. Hierzu kann die Ausgabeeinheit 9 eine separaten Ausgang 45 aufweisen, über den die Diagnosen D ausgegeben werden. Sie kann aber auch über den gleichen Ausgang übertragen werden, über den auch das Messsignal übertragen wird, indem sie beispielsweise über die Busleitung 21 ausgegeben wird, oder dem Signalstrom in den Anschlussleitungen 23 in Form eines Kommunikationssignals überlagert wird.

Das Feldgerät weist eine Schnittstelle 47 auf, über die ein Anwender für jedes von ihm gewünschte anwender-definierte Diagnoseverfahren X die Eingangsgrößen Eₓ auswählt, die auf die Eingangsgrößen Eₓ anzuwendenden Auswerteverfahren AVₓ auswählt, die Überwachungskriterien UKₓ auswählt, und die Diagnose Dₓ vorgibt.

Die Schnittstelle 47 ist in dem in Fig. 1 dargestellten Ausführungsbeispiel mit einer unmittelbar am Feldgerät angeordneten Bedienoberfläche mit einer Anzeige 49 und einer Eingabevorrichtung 51, z.B. einem Tastenblock, verbunden. Die Schnittstelle 47 ist an die Ausgabeeinheit 9 angebunden und erlaubt über die Ausgabeeinheit 9 eine bidirektionale Kommunikation mit dem Feldgerät. Über diese bidirektionale Verbindung erhält der Anwender Informationen die er zur Vorgabe seines anwender-definierten Diagnoseverfahrens benötigt. Je nach Ausgestaltung des Feldgerätes können aber auch andere Arten von Schnittstellen vorgesehen sein. Vorzugsweise werden hierzu Schnittstellen verwendet, über die das Feldgerät ohnehin verfügt.

Bei Feldgeräten, bei denen die Ausgabeeinheit 9 über Ausgänge verfügt, die eine bidirektionale Kommunikation zwischen dem Feldgerät und der übergeordneten Einheit 24 vorsehen, kann die Schnittstelle beispielsweise in der übergeordneten Einheit 24 integriert sein. Dort ist ohnehin regelmäßig eine Bedienoberfläche mit einer Anzeige und einer Eingabevorrichtung vorgesehen, über die der Anwender mit dem Feldgerät kommuniziert. Der Anwender erhält in diesem Fall über die übergeordnete Einheit 24 die Möglichkeit, sein anwender-definiertes Diagnoseverfahren vorzugeben.

Alternativ eignet sich als Schnittstelle ein mobiles Bedientool 55, dass an die Anschlussleitungen 23 der Ausgabeeinheit 9 anschließbar ist, und über ein dem Signalstrom überlagertes Kommunikationssignal mit dem Feldgerät kommuniziert.

Im Feldgerät ist mindestens ein Speicher 56 vorgesehen, in dem die für die anwender-definierten Diagnoseverfahren zur Verfügung stehenden Eingangsgrößen E₁ ... E_{L}, die zur Verfügung stehenden Auswerteverfahren AV₁ ... AVₘ, und die zur Verfügung stehenden Überwachungskriterien UK₁ ... UKₙ aufgelistet sind. Die Schnittstelle 47 weist eine Anzeige, hier beispielsweise die Anzeige 49, auf, die dazu dient, dem Anwender die zur Verfügung stehenden Eingangsgrößen E₁ ... E_{L}, die zur Verfügung stehenden Auswerteverfahren AV₁ ... AVₘ und die zur Verfügung stehenden Überwachungskriterien UK₁ ... UKₙ anzuzeigen, und sie weist eine Eingabevorrichtung, hier die Eingabevorrichtung 51, auf, über die der Anwender für jedes anwender-definierte Diagnoseverfahren X die zugehörigen Eingangsgrößen Eₓ, Auswerteverfahren AVₓ, Überwachungskriterien UKₓ, und die Diagnose Dₓ vorgibt. Diese Vorgaben werden im Feldgerät, z.B. in dem Speicher 56 abgelegt, wo sie von der Auswerteeinheit 29, der Überwachungseinheit 37 und der Diagnoseausgabe 43 abgerufen werden.

Die Implementierung eines anwender-definierten Diagnoseverfahrens erfolgt vorzugsweise in menue-geführter Form im Rahmen der Inbetriebnahme des Feldgeräts. Dabei wird vorzugsweise derart verfahren, dass der Anwender das Feldgerät in einen Modus zur Implementierung eines anwender-definierten Diagnoseverfahrens versetzt. In diesem Modus werden dem Anwender zunächst die im Speicher 56 aufgelisteten zur Verfügung stehenden Eingangsgrößen E₁ ... E_{L} angezeigt. In einem nächsten Schritt wählt der Anwender aus den zur Verfügung stehenden Eingangsgrößen E₁ ... E_{L} die für sein Diagnoseverfahren X relevanten Eingangsgrößen Eₓ aus und speichert diese im Feldgerät, hier im Speicher 56, ab. Anschließend werden dem Anwender die im Speicher 56 aufgelisteten zur Verfügung stehenden Auswerteverfahren AV₁ ... AVₘ angezeigt. Der Anwender wählt aus den zur Verfügung stehenden Auswerteverfahren AV₁ ... AVₘ die für sein Diagnoseverfahren X relevanten Auswerteverfahren AVₓ aus und gibt vor, auf welche der ausgewählten Eingangsgrößen Eₓ sie angewendet werden sollen. Diese Eingaben werden ebenfalls im Speicher 56 abgelegt. Beispiele hierzu sind in Fig. 2 dargestellt. Hieraus ergeben sich unmittelbar Art und Anzahl der von der Auswerteinheit 29 im Rahmen dieses Diagnoseverfahrens X zu erzeugenden Kenngrößen Kₓ. Diese können beispielsweise durch ein entsprechendes im Feldgerät implementiertes Software-Modul vom Gerät selbsttätig ermittelt werden. Wird ein Auswerteverfahren AV ausgewählt, für dessen Ausführung zusätzliche Informationen, wie z.B. eine Zeitdauer, über die eine Mittelwertbildung auszuführen ist, Schwellwerte, Referenzwerte oder Bezugsgrößen erforderlich sind, so wird der Anwender unmittelbar nach der Auswahl dieses Auswerteverfahrens AV aufgefordert, die erforderlichen Informationen durch entsprechende Eingaben zu ergänzen.

In einem nächsten Schritt wählt der Anwender aus den zur Verfügung stehenden Überwachungskriterien UK₁ ... UKₙ die für sein Diagnoseverfahren X relevanten Überwachungskriterien UKₓ aus und gibt dazu jeweils die Kenngröße K vor, auf die es angewendet werden soll. Um dem Anwender die Übersicht zu erleichtern kann dieser Schritt beispielsweise derart ausgeführt werden, dass das Feldgerät intern Art und Anzahl der Kenngrößen Kₓ ermittelt, und dem Anwender zu jeder Kenngröße K anzeigt, anhand von welchen Einganggrößen E sie abstammt und von welchen Auswerteverfahren AV sie erzeugt wird, und der Anwender jede dieser Anzeigen durch die Auswahl der auf die jeweilige Kenngröße K anzuwendenden Überwachungskriterien UK quittiert. Auch diese Vorgaben werden dann entsprechend im Speicher 56 im Feldgerät abgespeichert. Wird ein Überwachungskriterium UK ausgewählt, für dessen Ausführung zusätzliche Informationen, wie z.B. Schwellwerte, Referenzwerte oder Bezugsgrößen erforderlich sind, so wird der Anwender unmittelbar nach der Auswahl dieses Überwachungskriteriums UK aufgefordert, die erforderlichen Informationen durch entsprechende Eingaben zu ergänzen.

In einem letzten Schritt gibt der Anwender für jedes auszuführende Überwachungskriterium UKₓ eine zugehörige Diagnose Dₓ vor, die beim Eintreten dieses Überwachungskriteriums UKₓ von der Diagnoseausgabe 43 ausgegeben wird. Hierzu gibt es beispielsweise einen Meldungstext vor, der den diagnostizierten Fehler oder Zustand bezeichnet. Zusätzlich kann der Text die Ursache des Fehlers oder Zustandes und/oder die Angabe einer Abhilfemaßnahme enthalten. Ein solcher Meldungstext kann beispielsweise lauten: Änderungsgeschwindigkeit des Füllstandes zu gering; Zuleitung verstopft; Bitte System-Reinigung vornehmen'.

Zusätzlich kann jede Diagnose Dₓ mit einer sicherheitsgerichteten Reaktion des Feldgeräts auf das Auftreten des jeweiligen Zustands oder Fehlers verbunden werden, die durch die entsprechende Diagnose Dₓ im Gerät ausgelöst wird. Eine solche Reaktion ist beispielsweise die Auslösung eines Alarms oder das einfrieren der Messergebnisse. Derartige Reaktionen können dem Anwender als Funktionsblöcke zur Verfügung gestellt werden, die der Anwender bei der Implementierung seines Diagnoseverfahrens seinen Diagnosen Dₓ zuordnen kann.

Die Implementierung des anwender-definierten Diagnoseverfahrens ist sehr einfach und schnell ausführbar, da der Anwender lediglich die Struktur und den Ablauf vorgeben muss. Die einzelnen Auswerteverfahren und Überwachungskriterien liegen im Feldgerät als flexibel einsetzbare Module vor und müssen vom Anwender nicht erstellt werden.

Nachfolgend sind beispielhaft einige mögliche anwender-definierte Diagnoseverfahren aufgeführt. Ein sehr einfaches Diagnoseverfahren besteht darin, dass anhand der von der internen Uhr als Eingangsgröße E bereitgestellten Uhrzeit in einem Auswerteverfahren AV die Betriebsdauer des Feldgeräts als Kenngröße K ermittelt wird. Das entsprechende Überwachungskriterium UK ist in dem Fall das Überschreiten einer zulässigen Betriebsdauer. Tritt dieses Überwachungskriterium ein, wird als Diagnose z.B. ein Wartungsbedarf ausgegeben.

Ein weiteres Beispiel ist ein Diagnoseverfahren mit dem Kondensat in einem Behälter mit Kohlenwasserstoff (z.B. Treibstoff oder Mineralöl) erkannt werden kann. Hierzu wird als Eingangsgröße E z.B. das Echosignal eines nach dem Laufzeitprinzip arbeitenden Füllstandsmessgeräts, bei dem elektromagnetische Signale entlang eines Wellenleiters geführt werden, ausgewählt. Diese Eingangsgröße E wird einem Auswerteverfahren AV unterzogen, dass als Kenngröße K die Amplitude eines durch eine Reflektion am Wellenleiterende verursachten Echos bestimmt. Das Überwachungskriterium UK stellt fest, ob die Amplitude eine positive Polarität aufweist. Das ist dann der Fall, wenn durch Kondensat ein Sprung zu einer kleineren Wellenleiterimpedanz auftritt, während ohne Kondensat das freie Sondenende durch den Sprung zu einer größeren Wellenleiterimpedanz ein negatives Signal erzeugt. Tritt das Überwachungskriterium ein, so wird als Diagnose das Vorliegen von Kondensat im Behälter ausgegeben.

Ein weiteres in Verbindung mit nach dem Laufzeitprinzip arbeitenden Füllstandsmessgeräten, bei denen elektromagnetische Signale entlang eines Wellenleiters geführt werden, anwendbares Diagnoseverfahren erlaubt beispielsweise die Erkennung von Schaum auf der Füllgutoberfläche. Dabei wird als Eingangsgröße E beispielsweise ebenfalls das Echosignal verwendet. In einem ersten Auswerteverfahren AV1 wird die Amplitude des von der Reflektion an der Füllgutoberfläche stammenden Echos als Kenngröße K1 bestimmt. Anhand dieser Kenngröße K1 wird mittels eines entsprechenden Überwachungskriteriums UK1 bestimmt, ob diese Amplitude klein ist. Das Überwachungskriterium UK1 ist z.B. ein Vergleich der Kenngröße K1 mit einem Referenzwert. Eine kleine Amplitude des Füllstandsechos kann entweder auf das Vorliegen von Schaum oder auf ein Füllgut mit einer geringen Dielektrizitätskonstanten zurückzuführen sein. Um diese Unterscheidung treffen zu können wird die Eingangsgröße E einem zweiten Auswerteverfahren AV2 unterzogen, das die Amplitude eines durch eine Reflektion am Wellenleiterende verursachten Echos als weitere Kenngröße K2 bestimmt. Anhand dieser zweiten Kenngröße K2 wird mittels eines entsprechenden Überwachungskriteriums UK1 bestimmt, ob die Amplitude der vom Wellenleiterende stammenden Reflektion einen vorgegebenen Referenzwert unterschreitet, bzw. ob kein solches Echo vorhanden ist. Ist dies der Fall, so weist das Füllgut eine große Dielektrizitätskonstante auf. Die endgültige Diagnose ergibt sich dann aus der logischen Verknüpfung der beiden Überwachungskriterien. Sind beide Überwachungskriterien UK1 und UK2 erfüllt, so wird Schaum auf der Füllgutoberfläche als Ursache für die geringe Amplitude des von der Füllgutoberfläche stammenden Echos diagnostiziert.

Ist das anwender-definierte Diagnoseverfahren einmal implementiert, so bietet es für den Anwender den Vorteil, dass das Feldgerät für seine Anwendung maßgeschneiderte Diagnoseverfahren selbsttätig ausführt und nur dann eine Diagnose liefert, wenn ein zu diagnostizierender Fehler oder Zustand tatsächlich auftritt. Ist dies nicht der Fall, so ist in diesem Zusammenhang auch keinerlei Kommunikation mit dem Feldgerät erforderlich.

| Zeichen | Bezeichnung |
|---|---|
| 1 | Sensor |
| 3 | Signalaufbereitung |
| 5 | Speicher |
| 7 | Signalverarbeitung |
| 9 | Ausgabeeinheit |
| 11 | elektronische Einheit |
| 13 | Speicher |
| 15 | Schnittstelle |
| 17 | Vorortanzeige |
| 19 | Relais |
| 21 | Anschlussleitung |
| 23 | Anschlussleitung |
| 25 | Vorrichtung zur Durchführung von anwender-definierten Diagnoseverfahren |
| 27 | Eingangsschaltung |
| 29 | Auswerteeinheit |
| 31 | Mikroprozessor |
| 33 | |
| 35 | Schaltungen |
| 37 | Überwachungseinheit |
| 39 | Schaltungen |
| 41 | Schaltungen |
| 43 | Ausgabeeinheit |
| 45 | Ausgang |
| 47 | Schnittstelle |
| 49 | Anzeige |
| 51 | Eingabevorrichtung |
| 53 | übergeordnete Einheit |
| 55 | Bedientool |
| 56 | Speicher |

## Patentansprüche

1. Feldgerät mit
- einer Vorrichtung zur Durchführung von anwender-definierten Diagnoseverfahren (25),
-- die eine Eingangsschaltung (27) aufweist, über die der Vorrichtung (25) mindestens eine Eingangsgröße (E) zugeführt wird,
-- die eine Auswerteeinheit (29) aufweist,
--- die dazu dient, anhand mindestens einer vom Anwender ausgewählten Eingangsgröße (Eₓ) und mindestens einem vom Anwender ausgewählten Auswerteverfahren (AVₓ) mindestens eine Kenngröße (Kₓ) abzuleiten,
-- die eine Überwachungseinheit (37) aufweist,
... eingerichtet, die abgeleiteten Kenngrößen (Kₓ) anhand von vom Anwender ausgewählten Überwachungskriterien (UKₓ) zu überwachen, und
-- die eine Ausgabeeinheit (43) aufweist, eingerichtet, beim Eintreten eines Überwachungskriteriums (UKₓ) eine diesem Überwachungskriterium (UKₓ) zugeordnete Diagnose (Dₓ) auszugeben und
- einer Schnittstelle (47), eingerichtet derart, dass über diese ein Anwender für jedes anwender-definierte Diagnoseverfahren
--- die Eingangsgrößen (Eₓ) auswählt,
--- die auf die Eingangsgrößen (Eₓ) anzuwendenden Auswerteverfahren (AVₓ) auswählt,
--- die Überwachungskriterien (UKₓ) auswählt, und
--- die Diagnose (Dₓ) zur Ausgabe über die Ausgabeeinheit (43) vorgibt,
**dadurch gekennzeichnet, dass**
die zur Verfügung stehenden Auswerteverfahren (AVₓ) im Feldgerät als modular einsetzbare Funktionsblöcke realisiert sind, in den zugehörigen Funktionsblöcken im Feldgerät fest implementiert sind, durch entsprechende Vorgaben des Anwenders zugeschaltet und auf vom Anwender ausgewählte Eingangsgrößen (Eₓ) angewendet werden und dass jedes Überwachungskriterium (UK₁ ... UKₙ) als Modul im Feldgerät vorgesehen ist.

2. Feldgerät nach Anspruch 1, bei dem
- mindestens ein Speicher (56) vorgesehen ist, in dem die zur Verfügung stehenden Eingangsgrößen (E₁ ... Eₙ), die zur Verfügung stehenden Auswerteverfahren (AV₁ ... AVₘ), und die zur Verfügung stehenden Überwachungskriterien (UK₁ ... UKₙ) aufgelistet sind,
- die Schnittstelle (47) mit einer Anzeige (49) verbunden ist, die dazu dient, dem Anwender die zur Verfügung stehenden Eingangsgrößen (E₁ ... Eₙ), die zur Verfügung stehenden Auswerteverfahren (AV₁ ... AVₘ), und die zur Verfügung stehenden Überwachungskriterien (UK₁ ... UKₙ) anzuzeigen, und
- die Schnittstelle (47) mit einer Eingabevorrichtung (51) verbunden ist, über die der Anwender für jedes anwender-definierte Diagnoseverfahren die zugehörigen Eingangsgrößen (Eₓ), Auswerteverfahren (AVₓ), Überwachungsverfahren (UKₓ), und die Diagnosen (Dₓ) vorgibt.

3. Feldgerät nach Anspruch 1, bei dem
die Auswerteverfahren (AV) statische Auswertungen umfassen.

4. Feldgerät nach Anspruch 1, bei dem die Überwachungskriterien (UK) Vergleiche und/oder logische Verknüpfungen umfassen.

5. Feldgerät nach Anspruch 1, bei dem der Auswerteeinheit (29) eine interne Uhr (35) zugeordnet ist.

6. Feldgerät nach Anspruch 1, bei dem
die Schnittstelle (47) mit einer unmittelbar am Feldgerät angeordneten Bedienoberfläche mit einer Anzeige (49) und einer Eingabevorrichtung (51) verbunden ist.

7. Feldgerät nach Anspruch 1, bei dem die Diagnose (D) eine vom Anwender inhaltlich vorgegebene, in einem Speicher (56) im Feldgerät abgespeicherte, einen zu diagnostizierenden Fehler oder Zustand bezeichnende Meldung umfasst.

8. Feldgerät nach Anspruch 7, bei dem die Diagnose eine vom Anwender inhaltlich vorgegebene, in einem Speicher (56) im Feldgerät abgespeicherte Ursache und/oder Abhilfemaßnahme umfasst, die zusammen mit der zugehörigen Meldung ausgegeben wird.

9. Verfahren zur Implementierung eines anwender-definierten Diagnoseverfahrens in einem Feldgerät gemäß einem der vorangehenden Ansprüche, bei dem
- der Anwender aus den zur Verfügung stehenden Eingangsgrößen (E₁ ... E_{L}) die für sein Diagnoseverfahren (X) relevanten Eingangsgrößen (Eₓ) auswählt und im Feldgerät abspeichert,
- der Anwender aus den zur Verfügung stehenden Auswerteverfahren (AV₁ ... AVₘ) die für sein Diagnoseverfahren (X) relevanten Auswerteverfahren (AVₓ) auswählt, und vorgibt, auf welche der ausgewählten Eingangsgrößen (Eₓ) sie angewendet werden sollen,
- der Anwender aus den zur Verfügung stehenden Überwachungskriterien (UK₁ ... UKₙ) die für sein Diagnoseverfahren (X) relevanten Überwachungskriterien (UKₓ) auswählt,
und die Kenngröße (K) vorgibt, auf die sie angewendet werden sollen, und
- der Anwender für jedes Überwachungskriterium (UKₓ) eine zugehörige Diagnose (Dₓ) vorgibt, die beim Eintreten dieses Überwachungskriteriums (UKₓ) von der Diagnoseausgabe (43) ausgegeben wird,
**dadurch gekennzeichnet,**
**dass** die zur Verfügung stehenden Auswerteverfahren (AVₓ) im Feldgerät als modular einsetzbare Funktionsblöcke realisiert sind, die einzelnen Auswerteverfahren (AVₓ) in den zugehörigen Funktionsblöcken im Feldgerät fest implementiert sind, durch entsprechende Vorgaben des Anwenders zugeschaltet und auf vom Anwender ausgewählte Eingangsgrößen (Eₓ) angewendet werden und dass jedes Überwachungskriterium (UK₁ ... UKₙ) als Modul im Feldgerät vorgesehen ist.

## Claims

1. Field device with
- a unit for performing user-defined diagnostic procedures (25),
-- said unit having an input circuit (27), via which at least one input variable (E) is supplied to the unit (25),
-- said unit having an evaluation unit (29),
--- which is used to derive at least one characteristic variable (Kₓ) using at least one input variable (Eₓ) selected by the user and at least one evaluation procedure (AVₓ) selected by the user,
-- said unit having a monitoring unit (37),
--- which is configured to monitor the derived characteristic variables (Kₓ) using monitoring criteria (UKₓ) selected by the user, and
-- said unit having an output unit (43), which is configured in such a way that when a monitoring criterion (UKₓ) occurs it outputs a diagnostic (Dₓ) which is assigned to said monitoring criterion (UKₓ), and
- an interface, which is configured in such a way that a user uses said interface to select, for each user-defined diagnostic procedure,
--- the input variables (Eₓ),
--- the evaluation criteria (AVₓ) to be applied to the input variables (Eₓ),
--- the monitoring criteria (UKₓ), and
--- to specify the diagnostic (Dₓ) to be output via the output unit (43),
**characterized in that**
the evaluation procedures (AVₓ) available are implemented in the field device as function blocks which are used in a modular manner, are permanently implemented in the related function blocks in the field device, are activated by corresponding specifications of the user, and are applied to input variables (Eₓ) selected by the user, and **in that** each monitoring criterion (UK₁ ... UKₙ) is provided as a module in the field device.

2. Field device as claimed in Claim 1, wherein
- at least a memory (56) is provided in which the input variables (E₁ ... Eₙ) that are available, the evaluation procedures (AV₁ ... AVₘ) that are available and the monitoring criteria (UK₁ ... UKₙ) that are available are listed,
- the interface (47) is connected to a display (49) which is used to show the user the input variables (E₁ ... Eₙ) that are available, the evaluation procedures (AV₁ ... AVₘ) that are available and the monitoring criteria (UK₁ ... UKₙ) that are available, and
- the interface (47) is connected to an input unit (51) via which the user specifies the relevant input variables (Eₓ), evaluation procedures (AVₓ), monitoring procedures (UKₓ) and diagnostics (Dₓ) for each user-defined diagnostic procedure.

3. Field device as claimed in Claim 1, wherein the evaluation procedures (AV) comprise static evaluations.

4. Field device as claimed in Claim 1, wherein the monitoring criteria (UK) comprise comparisons and/or logic combinations.

5. Field device as claimed in Claim 1, wherein an internal clock (35) is assigned to the evaluation unit (29).

6. Field device as claimed in Claim 1, wherein the interface (47) is connected to a user interface, arranged immediately on the field device, with a display screen (49) and an input unit (51).

7. Field device as claimed in Claim 1, wherein the diagnostic (D) comprises a message, whose contents are defined by the user, and that is saved in a memory (56) in the field device and describes an error or a state to be diagnosed.

8. Field device as claimed in Claim 7, wherein the diagnostic comprises a cause and/or remedial measure, whose contents are defined by the user, and that is saved in a memory (56) in the field device, said cause and/or remedial measure being output together with the corresponding message.

9. Procedure designed for implementing a user-defined diagnostic procedure in a field device in accordance with one of the previous claims, wherein
- the user selects the input variables (Eₓ) that are relevant for his diagnostic procedure (X) from the input variables (E₁ ... E_{L}) that are available, and saves the input variables in the field device,
- the user selects the evaluation procedures (AVₓ) that are relevant for his diagnostic procedure (X) from the evaluation procedures (AV₁ ... AVₘ) that are available, and specifies to which of the selected input variables (Eₓ) they are to be applied,
- the user selects the monitoring criteria (UKₓ) which are relevant for his diagnostic procedure (X) from the monitoring criteria (UK₁ ... UKₙ) that are available, and specifies the characteristic variable (K) to which they should be applied, and
- for each monitoring criteria (UKₓ) the user specifies a corresponding diagnostic (Dₓ) which is output by the diagnostic output (43) if this monitoring criterion occurs,
**characterized in that**
the evaluation procedures (AVₓ) available are implemented in the field device as function blocks which are used in a modular manner, the individual evaluation procedures (AVₓ) are permanently implemented in the related function blocks in the field device, are activated by corresponding specifications of the user, and are applied to input variables (Eₓ) selected by the user, and **in that** each monitoring criterion (UK₁ ... UKₙ) is provided as a module in the field device

## Revendications

1. Appareil de terrain avec
- un dispositif destiné à l'exécution de procédures de diagnostic (25) définies par l'utilisateur,
-- lequel dispositif comprend un circuit d'entrée (27), par l'intermédiaire duquel au moins une grandeur d'entrée (E) est acheminée au dispositif (25),
-- lequel dispositif comprend une unité d'exploitation (29),
--- qui sert, au moyen d'au moins une grandeur d'entrée (Eₓ) sélectionnée par l'utilisateur et au moyen d'au moins une procédure d'exploitation (AVₓ) sélectionnée par l'utilisateur, de déduire au moins une grandeur caractéristique (Kₓ),
-- lequel dispositif comprend une unité de surveillance (37),
--- qui est configurée de manière à surveiller les grandeurs caractéristiques (Kₓ) dérivées au moyen de critères de surveillance (UKₓ) sélectionnés par l'utilisateur, et
-- lequel dispositif comprend une unité de sortie (43), configuré, en cas de survenue d'un critère de surveillance (UKₓ), de telle manière à délivrer un diagnostic (Dₓ) attribué à ce critère de surveillance (UKₓ), et
- une interface, configurée de telle manière qu'un utilisateur sélectionne par le biais de celle-ci, pour chaque procédure de diagnostic définie par l'utilisateur,
--- les grandeurs d'entrée (Eₓ),
--- les procédures d'exploitation à utiliser pour les grandeurs d'entrée (Eₓ),
--- les critères de surveillance (UKₓ), et
--- spécifie le diagnostic (Dₓ) pour la sortie par l'intermédiaire de l'unité de sortie (43),
**caractérisé**
**en ce que** les procédures d'exploitation (AVₓ) disponibles sont réalisées dans l'appareil de terrain en tant que blocs fonctionnels utilisables de façon modulaire, sont implémentées de façon fixe dans l'appareil de terrain dans les blocs fonctionnels correspondants, sont activées au moyen de spécifications appropriées de l'utilisateur et sont appliquées aux grandeurs d'entrée (Eₓ) sélectionnées par l'utilisateur, et **en ce que** chaque critère de surveillance (UK₁ ... UKₙ) est prévu en tant que module dans l'appareil de terrain.

2. Appareil de terrain selon la revendication 1, pour lequel
- est prévue au moins une mémoire (56), dans laquelle sont répertoriées les grandeurs d'entrée (E₁ ... En) disponibles, les procédures d'exploitation (AV₁ ... AVₘ) disponibles et les critères de surveillance (UK₁ ... UKₙ) disponibles,
- l'interface (47) est reliée avec l'afficheur (49), qui sert à afficher les grandeurs d'entrée (E₁ ... En) disponibles, les procédures d'exploitation (AV₁ ... AVₘ) disponibles et les critères de surveillance (UK₁ ... UKₙ) disponibles pour l'utilisateur, et
- l'interface (47) est reliée avec un dispositif d'entrée (51), par l'intermédiaire duquel l'utilisateur spécifie pour chaque procédure de diagnostic définie par l'utilisateur les grandeurs d'entrée (Eₓ), les procédures d'exploitation (AVₓ), les procédures de surveillance (UKₓ) et les diagnostics (Dₓ).

3. Appareil de terrain selon la revendication 1, pour lequel les procédures d'exploitation (AV) comprennent des exploitations statiques.

4. Appareil de terrain selon la revendication 1, pour lequel les critères de surveillance (UK) comprennent des comparaisons et des combinaisons logiques.

5. Appareil de terrain selon la revendication 1, pour lequel une horloge interne (35) est attribuée à l'unité d'exploitation (29).

6. Appareil de terrain selon la revendication 1, pour lequel l'interface (47) est reliée avec une interface utilisateur disposée directement sur l'appareil de terrain, laquelle interface utilisateur comporte un afficheur (49) et un dispositif d'entrée (51).

7. Appareil de terrain selon la revendication 1, pour lequel le diagnostic (D) comprend un message dont le contenu est spécifié par l'utilisateur, enregistré dans une mémoire (56) au sein de l'appareil de terrain, message désignant une erreur ou un état à diagnostiquer.

8. Appareil de terrain selon la revendication 7, pour lequel le diagnostic comprend une cause et/ou une mesure corrective dont le contenu est/sont spécifié(s) par l'utilisateur, enregistrée(s) dans une mémoire (56) au sein de l'appareil de terrain, laquelle cause et/ou laquelle mesure corrective est/sont délivrée(s) conjointement avec le message correspondant.

9. Procédé destiné à l'implémentation d'une procédure de diagnostic définie par l'utilisateur dans un appareil de terrain selon l'une des revendications précédentes, pour lequel
- l'utilisateur sélectionne, à partir des grandeurs d'entrée (E₁ ... E_{L}) disponibles, les grandeurs d'entrées (Eₓ) pertinentes pour sa procédure de diagnostic (X), et les enregistre dans l'appareil de terrain,
- l'utilisateur sélectionne, à partir des procédures d'exploitation (AV₁ ... AVₘ) disponibles, les procédures d'exploitation (AVₓ) pertinentes pour sa procédure de diagnostic (X), et spécifie à quelles grandeurs d'entrée (Eₓ) sélectionnées elles doivent être appliquées,
- l'utilisateur sélectionne, à partir des critères de surveillance (UK₁ ... UKₙ) disponibles, les critères de surveillance (UKₓ) pertinents pour sa procédure de diagnostic (X), et spécifie la grandeur caractéristique (K) à laquelle elles doivent être appliquées, et
- l'utilisateur spécifie pour chaque critère de surveillance (UKₓ) un diagnostic (Dₓ) correspondant, qui est délivré à chaque survenue de ce critère de surveillance (UKₓ) par l'unité de sortie de diagnostic (43),
**caractérisé**
**en ce que** les procédures d'exploitation (AVₓ) disponibles sont réalisées dans l'appareil de terrain en tant que blocs fonctionnels utilisables de façon modulaire, les différentes procédures d'exploitation (AVₓ) sont implémentées de façon fixe dans les blocs fonctionnels correspondants au sein de l'appareil de terrain, sont activées au moyen de spécifications appropriées de l'utilisateur et sont appliquées aux grandeurs d'entrée (Eₓ) sélectionnées par l'utilisateur,
et **en ce que** chaque critère de surveillance (UK₁ ... UKₙ) est prévu en tant que module dans l'appareil de terrain.
